# EUROPÄISCHE PATENTANMELDUNG

(11) **EP 3 527 853 A1**
(43) Veröffentlichungstag der Anmeldung: **21.08.2019**
(21) Anmeldenummer: 18000162.0
(22) Anmeldetag: 19.02.2018
(51) Int. Cl.: F16H 57/08

(54) **MOTOR-GETRIEBEANORDNUNG**

(71) Anmelder: IMS Gear SE & Co. KGaA, 78166 Donaueschingen (DE)
(72) Erfinder: Albert, Simon, 79848 Bonndorf im Schwarzwald (DE); Kieninger, Matthias, 78050 Villingen Schwenningen (DE)
(74) Vertreter: Westphal, Mussgnug & Partner Patentanwälte mbB

(57) **Zusammenfassung**

Die vorliegende Erfindung betrifft eine Motor-Getriebeanordnung insbesondere für eine Verstelleinrichtung (62) in Fahrzeugen (60) zum Verstellen zweier zueinander verstellbarer Fahrzeugteile, umfassend ein Planetengetriebe (12) mit zumindest einem Planetenträger (16), zumindest einem Planetenrad (18), das drehbar im Planetenträger (16) gelagert ist und eine Planetenradverzahnung (20) aufweist, und zumindest einem Hohlrad (22) mit einer Innenverzahnung (24), welche mit der Planetenradverzahnung (20) in Eingriff steht, und einen Elektromotor (14) mit einer um eine Motorwellenachse (A_{MW}) drehbaren Motorwelle (15), welche eine direkt auf der Motorwelle (15) angeordnete Motorwellenverzahnung (30) aufweist, die mit der Planetenradverzahnung (20) in Eingriff steht. Weiterhin betrifft die Erfindung eine Verstelleinrichtung (62) mit einer derartigen Motor-Getriebeanordnung (10) sowie die Verwendung einer solchen Motor-Getriebeanordnung (10) in Verstelleinrichtungen (62).

## Beschreibung

Die vorliegende Erfindung betrifft eine Motor-Getriebeanordnung insbesondere für eine Verstelleinrichtung in Fahrzeugen zum Verstellen zweier zueinander verstellbarer Fahrzeugteile. Weiterhin betrifft die Erfindung eine Verstelleinrichtung mit einer derartigen Motor-Getriebeanordnung sowie die Verwendung einer solchen Motor-Getriebeanordnung in Verstelleinrichtungen von Fahrzeugen.

Verstelleinrichtungen in Fahrzeugen weisen in zunehmendem Maße Hilfsantriebe auf, mit denen zwei zueinander verstellbare Fahrzeugteile relativ zueinander bewegt werden können, ohne dass die Fahrzeuginsassen selbst manuell das hierzu notwendige Drehmoment aufbringen müssen. Ein Beispiel für derartige Hilfsantriebe sind elektromechanische Aktuatoranordnungen, die unter anderem zum Betätigen von Parkbremsen von Fahrzeugen eingesetzt werden. Andere Hilfsantriebe werden beispielsweise für Sitzlängsverstellungen, Heckklappenverstellungen, Fensterheber und Schiebedachverstellungen eingesetzt.

Bei Hilfsantrieben werden nahezu ausnahmslos Elektromotoren als Antriebsquelle eingesetzt. Die typischerweise verwendeten Elektromotoren drehen häufig mit einer vergleichsweise hohen Drehzahl, so dass hohe Untersetzungen erforderlich sind, um die Fahrzeugteile mit der gewünschten, vergleichsweise langsamen Bewegung relativ zueinander verstellen zu können. Zudem sind die vom Elektromotor abgegebenen Drehmomente häufig nicht ausreichend, um die Fahrzeugteile bewegen zu können, so dass auch aus diesem Grund Untersetzungen notwendig sind.

In Fahrzeugen ist der zur Verfügung stehende Raum knapp bemessen, so dass die für die Drehmomentwandlung eingesetzten Getriebe nur einen geringen Bauraum beanspruchen dürfen. Aus diesem Grund werden im Antriebsstrang der Hilfsantriebe sehr häufig Planetengetriebe eingesetzt, welche große Über- oder Untersetzungsverhältnisse auf kleinem Raum ermöglichen. Die Hilfsantriebe weisen in vielen Fällen eine Motor-Getriebeanordnung auf, in welcher der Elektromotor und das Planetengetriebe zu einer Baueinheit zusammengefasst sind.

Die Elektromotoren werden mit einer aus ihrem Gehäuse herausragenden Motorwelle geliefert, auf welche ein Ritzel, im Falle eines Planetengetriebes das Sonnenrad, aufgepresst wird. Beispielsweise in der EP 2 860 336 A2 oder der EP 2 860 338 A2 ist das Sonnenrad axial bewegbar, aber drehfest, auf der Motorwelle gelagert.

In beiden Fällen ist ein zusätzlicher Arbeitsschritt notwendig, um das Ritzel auf der Motorwelle zu befestigen. Bei diesem Arbeitsschritt können Fehlmontagen auftreten. Zudem muss die benötigte Anzahl der Ritzel vorgehalten werden, wodurch eine entsprechende Lagerhaltung benötigt wird. Die Montage der Motor-Getriebeanordnung wird daher verkompliziert.

Aufgabe einer Ausführungsform der vorliegenden Erfindung ist es, eine Motor-Getriebeanordnung zu schaffen, welche eine Abhilfe für die oben beschriebene Situation schafft. Insbesondere soll die Montage der Motor-Getriebeanordnung vereinfacht und die Ausschussrate verringert werden.

Diese Aufgabe wird mit den in den Ansprüchen 1, 12, 15 und 17 angegebenen Merkmalen gelöst. Vorteilhafte Ausführungsformen sind Gegenstand der Unteransprüche.

Eine Ausführungsform der Erfindung betrifft eine Motor-Getriebeanordnung insbesondere für eine Verstelleinrichtung in Fahrzeugen zum Verstellen zweier zueinander verstellbarer Fahrzeugteile, umfassend ein Planetengetriebe mit zumindest einem Planetenträger, zumindest einem Planetenrad, das drehbar im Planetenträger gelagert ist und eine Planetenradverzahnung aufweist, und zumindest einem Hohlrad mit einer Innenverzahnung, welche mit der Planetenradverzahnung in Eingriff steht. Weiterhin umfasst die Motor-Getriebeanordnung einen Elektromotor mit einer um eine Motorwellenachse drehbaren Motorwelle, welche eine direkt auf der Motorwelle angeordnete Motorwellenverzahnung aufweist, die mit der Planetenradverzahnung in Eingriff steht.

Dadurch, dass die Motorwellenverzahnung direkt auf der Motorwelle angeordnet ist, bildet die Motorwelle selbst das Ritzel oder das Sonnenrad, ohne dass ein zusätzliches Bauteil notwendig ist. Folglich wird die Montage der Motor-Getriebeanordnung dahingehend erleichtert, als dass kein Ritzel oder Sonnenrad vorgehalten und montiert werden muss. Unterbrechungen der Montage durch fehlende oder fehlerhafte Sonnenräder oder Ritzel können vermieden werden. Zudem werden Fehler, die bei der Befestigung des Sonnenrads oder des Ritzels auf der Motorwelle entstehen, abgewendet.

Nach Maßgabe einer weiteren Ausführungsform ist das Planetengetriebe als ein Schraubrad-Planetengetriebe ausgebildet, wobei das zumindest eine Planetenrad um eine Planetenradachse drehbar im Planetenträger gelagert ist und die Planetenradachse windschief zur Motorwellenachse verläuft. Bei Schraubrad-Planetengetrieben sind die Sonnenradverzahnung, in diesem Fall die Motorwellenverzahnung, als eine Schraubverzahnung, auch häufig Schraubrad-Sonne genannt, und das Hohlrad als ein Innenschraubrad ausgebildet. Die Planetenradverzahnung ist auf die Schraubverzahnung der Schraubrad-Sonne angepasst. Selbiges gilt für die Innenverzahnung des Innenschraubrads. In dieser Ausführungsform weist das Planetengetriebe eine Ähnlichkeit mit sogenannten Koaxial-Getrieben auf, wie sie in der WO 2015/036328 A1 und der EP 2 166 252 A1 offenbart sind.

Ein besonders auffälliges Merkmal sowohl von Schraubrad-Planetengetrieben als auch von Koaxial-Getriebe ist die Tatsache, dass die Planetenradachsen nicht parallel zur Drehachse der Schnecke, sondern windschief hierzu verlaufen. Neben der hohen Über- oder Untersetzungsverhältnisse stellen Schraubrad-Planetengetriebe ein ruhiges Laufverhalten bei einer geringen Geräuschentwicklung bereit.

In einer weitergebildeten Ausführungsform können das Planetengetriebe und insbesondere das Schraubrad-Planetengetriebe einstufig ausgebildet sein. Im Vergleich zu mehrstufigen Planetengetrieben wird die Komplexität des Antriebsstrangs reduziert, wodurch die Fertigung vereinfacht sowie die Ausfallwahrscheinlichkeit und der benötigte Bauraum verringert werden. Insbesondere wird der Bauraum in axialer Richtung gering gehalten, was insbesondere bei Heckklappenverstellungen ein wichtiges Merkmal ist. Die erforderlichen Über- oder Untersetzungsverhältnisse insbesondere bei Heckklappenverstellungen lassen sich mit Schraubrad-Planetengetrieben besonders gut bereitstellen.

Bei einer weitergebildeten Ausführungsform kann der Elektromotor ein Gehäuse aufweisen und die Motorwelle kann mittels eines ersten Lagerungsabschnitts und eines zweiten Lagerungsabschnitts axial und radial im und/oder am Gehäuse gelagert sein. Die Lagerung im Gehäuse des Elektromotors bietet sich an, da keine zusätzlichen Maßnahmen im Getriebe getroffen werden müssen, um die Motorwelle zu lagern. Insbesondere müssen keine Vorkehrungen zum Anordnen eines Lagers im Planetenträger getroffen werden, was die Montage deutlich vereinfacht, da sämtliche im Gegensatz zu der WO 2015/036328 A1 sowohl der erste Lagerungsabschnitt als auch der zweite Lagerungsabschnitt außerhalb des Planetenträgers angeordnet sind. Für den Fall, dass das Planetengetriebe als ein Schraubrad-Planetengetriebe ausgestaltet ist, werden vergleichsweise hohe Axialkräfte auf die Motorwelle übertragen, so dass die üblicherweise bei Elektromotoren verwendeten Lagerungen für die Motorwelle nicht ausreichen, die auf die Motorwelle wirkenden Axialkräfte aufzunehmen. Die Lagerung der Motorwelle nach dieser Ausführungsform stellt sicher, dass die Motorwelle insbesondere in axialer Richtung ausreichend gelagert ist.

Bei einer weiteren Ausführungsform können der erste Lagerungsabschnitt und/oder der zweite Lagerungsabschnitt jeweils ein Gleitlager zum radialen Lagern der Motorwelle umfassen. Gleitlager zeichnen sich durch einen einfachen und beispielsweise im Vergleich zu Kugellagern platzsparenden Aufbau aus und lassen sich einfach montieren. Zudem zeichnen sich Gleitlager durch ein vergleichsweise geringes Gewicht aus. Bei einer entsprechenden Wahl der Gleitlager können diese wartungsfrei betrieben werden. Insbesondere aufgrund ihres platzsparenden Aufbaus und ihres geringen Gewichts eignen sich Gleitlager in besonderem Maße zur Verwendung von Hilfsantrieben in Fahrzeugen.

Eine weitergebildete Ausführungsform zeichnet sich dadurch aus, dass zumindest eine Lagerungsscheibe mit der Motorwelle verbunden ist, mit welcher die Motorwelle in zumindest einem der Lagerungsabschnitte axial gelagert ist. Die Lagerungsscheibe kann auf die Motorwelle aufgepresst werden, so dass keine weiteren Maßnahmen zum axialen Befestigen der Lagerungsscheibe auf der Motorwelle notwendig sind. Die Verwendung einer Lagerungsscheibe stellt eine sehr einfache Weise der axialen Lagerung dar, die zudem bauraum- und gewichtssparend ist.

Nach Maßgabe einer weiteren Ausführungsform liegt die zumindest eine Lagerungsscheibe am Gleitlager an. Die Lagerungsscheibe kommt im Betrieb der Motor-Getriebeanordnung in Kontakt mit einem axial benachbarten Bauteil, wodurch eine Verschleißstelle entsteht. Da Gleitlager aus Materialien gefertigt sind, die eine geringe Reibung bei Kontakt zwischen zwei sich relativ zueinander bewegenden Bauteilen erzeugen, wird der Verschleiß gering gehalten, ohne dass eine Schmierung notwendig ist. Die Verwendung der Gleitlager als axialer Anschlag für die Lagerungsscheibe nutzt die verschleißmindernde Eigenschaft der Gleitlager nicht nur in Bezug auf die Motorwelle, sondern auch auf die Lagerungsscheibe. Das Gleitlager ist im Gehäuse des Gehäuses des Elektromotors gelagert. Die Lagerungsscheibe weist einen Durchmesser aus, der den äußeren Durchmesser des Gleitlagers übersteigt, so dass eine axiale Sicherung der Motorwelle auch dann noch gesichert ist, wenn das Gleitlager lockern oder verschleißen sollte.

Eine weitere Ausführungsform zeichnet sich dadurch aus, dass die Motorwellenverzahnung einen äußeren Verzahnungsdurchmesser und die Motorwelle zumindest in einem sich der Motorwellenverzahnung anschließenden ersten Wellenabschnitt einen ersten Motorwellendurchmesser aufweist, wobei der Verzahnungsdurchmesser kleiner als der oder gleich dem ersten Motorwellendurchmesser ist. Hierdurch wird die Montage flexibler, da die Motorwellenverzahnung kein Hindernis bei der Montage darstellt. Insbesondere kann die Lagerungsscheibe von beiden Enden auf die Motorwelle aufgeschoben werden. Selbiges gilt auch für die Gleitlager. Zudem lassen sich die Über- oder Untersetzungsverhältnisse des Planetengetriebes mit abnehmendem Verzahnungsdurchmesser der äußeren Motorwellenverzahnung erhöhen. Die Erhöhung des Übersetzungsverhältnisses lässt sich beispielsweise mittels einer Verringerung der Zähnezahl der Motorwellenverzahnung umsetzen. Der Motorwellendurchmesser ist über einen gleich bleibenden Modul mit der Zähnezahl verknüpft und nimmt infolge einer Reduzierung der Zähnezahl ab. Um das Übersetzungsverhältnis zu erhöhen, kann auch die Zähnezahl der Innenverzahnung des Hohlrads erhöht werden.

Gemäß einer weiteren Ausführungsform umfasst der erste Lagerungsabschnitt oder der zweite Lagerungsabschnitt ein Wälzlager zum radialen und axialen Lagern der Motorwelle. Hierzu können beispielsweise Kugellager eingesetzt werden, welche kostengünstig verfügbar sind und sowohl eine axiale als auch eine radiale Lagerung bereitstellen. Die Verwendung von Lagerungsscheiben, wie sie bei Gleitlagern erforderlich ist, kann entfallen, so dass die Anzahl der Bauteile reduziert werden kann.

Nach einer weiteren Ausführungsform ist das Wälzlager im ersten Wellenabschnitt angeordnet und die Motorwelle weist einen zweiten Wellenabschnitt mit einem zweiten Wellendurchmesser auf, der kleiner ist als der erste Wellendurchmesser. Es bietet sich dabei an, die Motorwellenverzahnung auf dem ersten Wellenabschnitt und den zweiten Wellenabschnitt so anzuordnen, dass sich der zweite Wellenabschnitt zumindest zum größten Teil innerhalb des Elektromotors befindet. Insbesondere das für die Spulen des Elektromotors benötigte Volumen wächst stark mit dem Wellendurchmesser im Elektromotor an. Je kleiner der Wellendurchmesser der Motorwelle im Elektromotor ist, desto kleiner kann auch der Durchmesser oder die radiale Erstreckung des Elektromotors gewählt werden, so dass die Motor-Getriebeanordnung kompakt ausgeführt werden kann. Die Anordnung des Wälzlagers im ersten Wellenabschnitt, der den größeren ersten Wellendurchmesser aufweist, ermöglicht es, das Wälzlager ausreichend zu dimensionieren, so dass die Ausfallwahrscheinlichkeit im Betrieb der Motor-Getriebeanordnung sehr gering ist.

Eine weitere Ausführungsform ist dadurch gekennzeichnet, dass das Hohlrad drehfest mit dem Elektromotor verbunden ist. Im Allgemeinen ist es einfacher, das Hohlrad bzw. das Innenschraubrad drehfest am Elektromotor zu befestigen als das Hohlrad bzw. das Innenschraubrad zwar axial fixiert, aber drehbar mit dem Elektromotor zu verbinden. Zudem weist die Motor-Getriebeanordnung außen keine drehbaren Teile auf, da das Innenschraubrad den sich drehenden Planetenträger umschließt, wodurch sich die Sicherheit im Betrieb der Motor-Getriebeanordnung erhöhen lässt.

In einer weiteren Ausführungsform kann zwischen dem Hohlrad und dem Elektromotor ein Adapter angeordnet sein, der drehfest mit dem Elektromotor und dem Hohlrad verbunden ist. Die Verwendung eines Adapters ermöglicht es, ein gegebenes Planetengetriebe an unterschiedliche Elektromotoren anzuschließen, ohne dass hierzu größere konstruktive Änderungen notwendig sind. In vielen Fällen genügt es, den Adapter entsprechend anzupassen. Für den Fall, dass das Planetengetriebe und insbesondere das Hohlrad aus Kunststoff gefertigt und spritzgegossen sind, kann es sein, dass zur Vermeidung von Hinterschneidungen das Hohlrad nur eine kleine Verbindungsfläche aufweist, mit welcher das Hohlrad am Gehäuse des Elektromotors befestigt werden kann. Die kleine Verbindungsfläche kann beispielsweise dann, wenn das Hohlrad am Gehäuse des Elektromotors verklebt wird, zu klein sein, um die auftretenden Drehmomente sicher aufzunehmen. Der Adapter kann so ausgestaltet werden, dass die Verbindungsflächen vergrößert werden, ohne dass das Gehäuse des Elektromotors verändert werden muss. Folglich können die übertragbaren Drehmomente auf einfache Weise vergrößert werden. Weiterhin lässt sich das Getriebespiel mit einer entsprechenden Anpassung des Adapters relativ einfach verändern, wenn dies notwendig sein sollte.

Eine Ausgestaltung der Erfindung betrifft die Verwendung einer Motor-Getriebeanordnung nach einer der zuvor beschriebenen Ausführungsformen für eine Verstelleinrichtung in Fahrzeugen zum Verstellen zweier zueinander verstellbarer Fahrzeugteile. Zudem betrifft eine Ausbildung der Erfindung eine Verstelleinrichtung in Fahrzeugen zum Verstellen zweier zueinander verstellbarer Fahrzeugteile mit einer Getriebeanordnung nach einer der zuvor beschriebenen Ausführungsformen. Die technischen Effekte und Vorteile, die sich mit der vorschlagsgemäßen Verwendung sowie der vorschlagsgemäßen Verstelleinrichtung erreichen lassen, entsprechen denjenigen, die für die vorliegende Motor-Getriebeanordnung erörtert worden sind. Insbesondere lässt sich die Montage vereinfachen und Ausfallzeiten infolge von fehlenden oder fehlerhaften Ritzeln oder Sonnenrädern vermeiden. Zudem lassen sich Fehler bei der Befestigung der Ritzel oder Sonnenräder auf der Motorwelle Fehlmontagen unterbinden.

In einer weiteren Ausgestaltung der Verwendung kann die Verstelleinrichtung als eine Heckklappenverstellung ausgebildet sein. Die vereinfachte und fehlerreduzierte Montage der Motor-Getriebeanordnung kommt bei Heckklappenverstellungen, auch als Heckklappenantriebe bezeichnet, besonders deutlich zum Tragen.

Nach Maßgabe einer fortgebildeten Ausgestaltung der Verwendung ist das Planetengetriebe als ein Schraubrad-Planetengetriebe ausgebildet. Wie erwähnt, lassen sich mit Schraubrad-Planetengetrieben hohe Über- und Untersetzungsverhältnisse mit geringem Bauraum realisieren. Hierbei bietet es sich besonders an, das Schraubrad-Planetengetriebe einstufig auszuführen. Zudem bieten Schraubrad-Planetengetriebe ein ruhiges Laufverhalten bei einer geringen Geräuschentwicklung bereit. Diese Eigenschaften spielen bei Heckklappenverstellungen eine besonders große Rolle.

Eine weitere Implementierung der vorliegenden Erfindung betrifft einen Elektromotor insbesondere zur Verwendung in einer Motor-Getriebeanordnung nach einem der zuvor beschriebenen Ausführungsformen, wobei der Elektromotor eine um eine Motorwellenachse drehbare Motorwelle umfasst, welche eine direkt auf der Motorwelle angeordnete Motorwellenverzahnung aufweist. Die technischen Effekte und Vorteile, die sich mit dem Elektromotor erreichen lassen, entsprechen denjenigen, die für die Motor-Getriebeanordnung erwähnt worden sind.

In einer weitergebildeten Implementierung weist der Elektromotor ein Gehäuse auf, wobei die Motorwelle mittels eines ersten Lagerungsabschnitts und eines zweiten Lagerungsabschnitts axial und radial im Gehäuse gelagert ist. Die Lagerung im Gehäuse des Elektromotors bietet sich an, da keine zusätzlichen Maßnahmen im Getriebe getroffen werden müssen, um die Motorwelle zu lagern. Insbesondere befinden sich der erste und der zweite Lagerungsabschnitt der Motorwelle im Vergleich zu der beispielsweise in der WO 2015/036328 A1 gezeigten Lagerungsanordnung nicht im Planetenträger, sondern außerhalb des Planetenträgers. Für den Fall, dass das Planetengetriebe als ein Schraubrad-Planetengetriebe ausgestaltet ist, werden vergleichsweise hohe Axialkräfte auf die Motorwelle übertragen, so dass die üblicherweise bei Elektromotoren verwendeten Lagerungen für die Motorwelle nicht ausreichen, die auf die Motorwelle wirkenden Axialkräfte aufzunehmen. Die Lagerung der Motorwelle nach dieser Ausführungsform stellt sicher, dass die Motorwelle insbesondere in axialer Richtung ausreichend gelagert ist.

Zudem betrifft eine Umsetzung der vorliegenden Erfindung eine Verstelleinrichtung in Fahrzeugen zum Verstellen zweier zueinander verstellbarer Fahrzeugteile, umfassend zumindest eine Motor-Getriebeanordnung nach einem der zuvor diskutierten Ausführungsformen. Die technischen Effekte und Vorteile, die sich mit der Verstelleinrichtung erreichen lassen, entsprechen denjenigen, die für die Motor-Getriebeanordnung erwähnt worden sind.

Beispielhafte Ausführungsformen der Erfindung werden im Folgenden unter Bezugnahme auf die beigefügten Zeichnungen näher erläutert. Es zeigen
- Figur 1a: eine erste Ausführungsform einer erfindungsgemäßen Motor-Getriebeanordnung anhand einer Schnittdarstellung in einem nicht fertig montierten Zustand,
- Figur 1b: die in Figur 1a gezeigte Motor-Getriebeanordnung anhand einer perspektivischen Darstellung in einem nicht fertig montierten Zustand,
- Figur 1c: die in Figur 1a gezeigte Motor-Getriebeanordnung anhand einer Schnittdarstellung im fertig montierten Zustand,
- Figur 2: eine zweite Ausführungsform der MotorGetriebeanordnung,
- Figur 3: eine dritte Ausführungsform der MotorGetriebeanordnung,
- Figur 4: eine vierte Ausführungsform der MotorGetriebeanordnung, jeweils anhand einer Schnittdarstellung im fertig montierten Zustand,
- Figur 5: eine fünfte Ausführungsform der MotorGetriebeanordnung, wobei das Getriebe weggelassen ist,
- Figur 6: eine sechste Ausführungsform der MotorGetriebeanordnung, wobei das Getriebe weggelassen ist, und
- Figur 7: eine prinzipielle Darstellung einer Verstelleinrichtung in einem Fahrzeug.

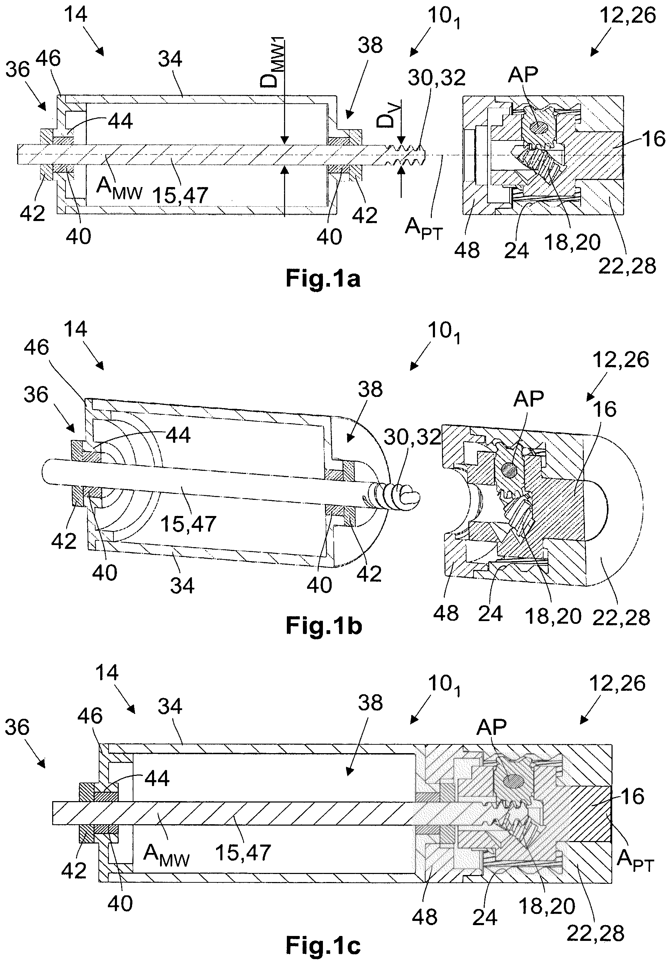

In den Figuren 1a bis 1c ist eine erste Ausführungsform einer erfindungsgemäßen Motor-Getriebeanordnung 10₁ anhand von verschiedenen Darstellungen in unterschiedlichen Montagezuständen gezeigt. Die Motor-Getriebeanordnung 10₁ umfasst ein Planetengetriebe 12 und einen Elektromotor 14. Der Elektromotor 14 ist mit einer Motorwelle 15 ausgestattet, die um eine Motorwellenachse A_{MW} drehbar ist.

Das Planetengetriebe 12 weist einen Planetenträger 16 auf, der eine Planetenträgerachse A_{PT} definiert und auf welchem insgesamt drei Planetenräder 18 um eine Planetenradachse A_{P} drehbar gelagert sind. Die Planetenräder 18 verfügen über eine Planetenradverzahnung 20. Weiterhin umfasst das Planetengetriebe 12 ein Hohlrad 22 mit einer Innenverzahnung 24, welche mit der Planetenradverzahnung 20 in Eingriff steht.

In der dargestellten Ausführungsform ist das Planetengetriebe 12 als ein Schraubrad-Planetengetriebe 26 ausgebildet. Bei dieser Ausführungsform verlaufen die Planetenradachsen A_{P} windschief zur Planetenträgerachse A_{PT}. Weiterhin ist hierbei das Hohlrad 22 als ein Innenschraubrad 28 ausgeführt. Die Motorwelle 15 weist eine direkt auf der Motorwelle 15 angeordnete Motorwellenverzahnung 30 auf, die als eine Schraubverzahnung einer Schraubrad-Sonne 32 ausgebildet ist. Die Motorwellenverzahnung 30 bildet ein Ende der Motorwelle 15. Die Planetenradverzahnung 20 und die Innenverzahnung 24 des Innenschraubrads 28 sind an die Schraubverzahnung der Schraubrad-Sonne 32 angepasst, um einen möglichst optimalen Eingriff innerhalb des Schraubrad-Planetengetriebes 26 bereitzustellen.

Der Elektromotor 14 umfasst ein Gehäuse 34 sowie einen ersten Lagerungsabschnitt 36 und einen zweiten Lagerungsabschnitt 38 zum axialen und radialen Lagern der Motorwelle 15 im Elektromotor 14. In der ersten Ausführungsform der Motor-Getriebeanordnung 10₁ beinhalten sowohl der erste Lagerungsabschnitt 36 als auch der zweite Lagerungsabschnitt 38 jeweils ein Gleitlager 40 und eine auf die Motorwelle 15 aufgepresste Lagerungsscheibe 42. Die beiden Gleitlager 40 sind jeweils in einer zylindrischen Aufnahme 44 des Gehäuses 34 des Elektromotors 14 befestigt. Die beiden Lagerungsscheiben 42 sind außerhalb des Gehäuses 34 angeordnet und liegen jeweils an einem der Gleitlager 40 axial an, wobei ein gewisses axiales Spiel zur Vermeidung einer statischen Überbestimmung vorgesehen wird. Das Gehäuse 34 des Elektromotors 14 weist einen Deckel 46 auf, welcher die zylindrische Aufnahme 44 für das Gleitlager 40 bildet.

Die Motorwelle 15 weist einen ersten Wellenabschnitt 47 auf, in welcher die Motorwelle 15 einen ersten Motorwellendurchmesser D_{MW1} aufweist. Die Motorwellenverzahnung 30 weist einen äußeren Verzahnungsdurchmesser D_{V} auf. Je nach gewählter Verzahnung kann der äußere Verzahnungsdurchmesser D_{V} der Kopfkreisdurchmesser sein. In der dargestellten ersten Ausführungsform ist der äußere Verzahnungsdurchmesser D_{V} gleich dem ersten Motorwellendurchmesser D_{MW1}, wobei der äußere Verzahnungsdurchmesser D_{V} auch kleiner als der erste Motorwellendurchmesser D_{MW1} gewählt werden kann. Folglich können die Gleitlager 40 und die Lagerungsscheiben 42 über die Motorwellenverzahnung 30 geschoben oder die Motorwellenverzahnung 30 durch die Gleitlager 40 durchgeführt werden. Je nach Anforderung kann der Verzahnungsdurchmesser D_{V} auch größer als der Motorwellendurchmesser D_{MW1} gewählt werden. Insbesondere für die Anpassung der Übersetzungsverhältnisse bietet sich die Variation des Verzahnungsdurchmessers D_{V} an.

Weiterhin umfasst die Motor-Getriebeanordnung 10₁ einen Adapter 48, der im in den Figuren 1a und 1b gezeigten Montagezustand am Innenschraubrad 28 befestigt ist, beispielsweise durch Verstemmen, Verkleben oder Verschweißen. Der Adapter 48 kann an die verschiedenen geometrischen Eigenschaften des Gehäuses 34 des Elektromotors 14 angepasst werden, so dass das Planetengetriebe 12 unverändert oder nahezu unverändert mit unterschiedlichen Elektromotoren zu einer Motor-Getriebeanordnung 10₁ verbunden werden kann.

Zum Verbinden des Planetengetriebes mit dem Elektromotor 14 werden diese so zueinander ausgerichtet, dass die Motorwellenachse A_{MW} und die Planetenträgerachse A_{PT} miteinander fluchten. Anschließend wird die Motorwelle 15 mit der Motorwellenverzahnung 30 in das Planetengetriebe 12 eingebracht, so dass die Motorwellenverzahnung 30 mit der Planetenradverzahnung 20 in Eingriff steht. Der Adapter 48 ist so bemessen, dass dann, wenn sich die Motorwellenverzahnung 30 in Eingriff mit der Planetenradverzahnung 20 befindet, der Adapter 48 am Gehäuse 34 des Elektromotors 14 anliegt. Der Adapter 48 wird nun mit dem Gehäuse 34 verbunden, beispielsweise durch Verkleben, Verschrauben oder Verschweißen. Die Motor-Getriebeanordnung 10₁ befindet sich nun im fertig montierten Zustand, der in Figur 1c dargestellt ist.

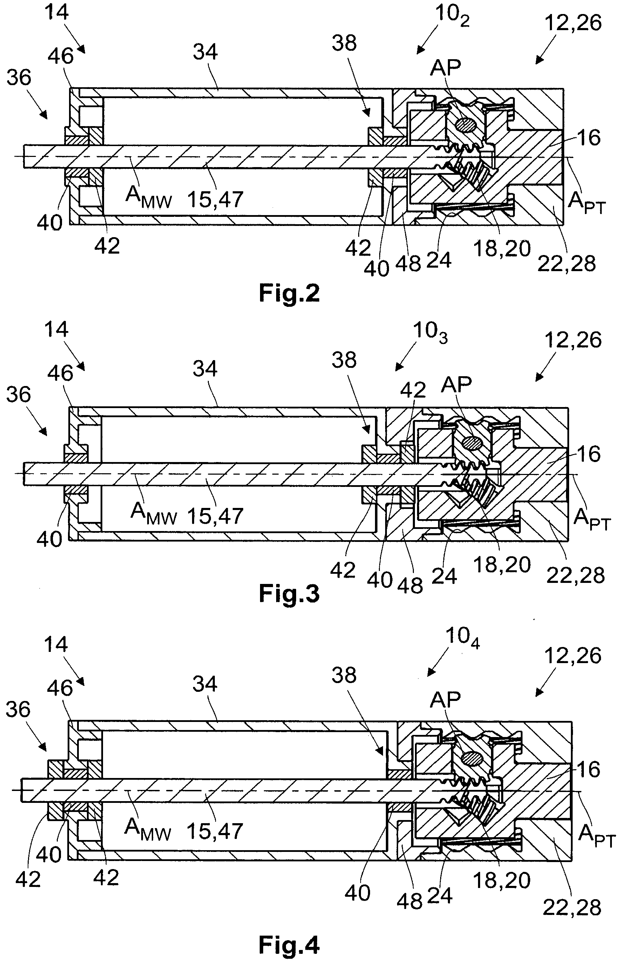

In den Figuren 2 bis 4 sind eine zweite, dritte und vierte Ausführungsform der Motor-Getriebeanordnung 10₂ bis 10₄ anhand einer Schnittdarstellung im fertig montierten Zustand gezeigt. Die dort gezeigten Ausführungsformen unterscheiden sich im Wesentlichen in der Ausbildung des ersten Lagerungsabschnitts 36 und des zweiten Lagerungsabschnitts 38.

In der zweiten Ausführungsform der Motor-Getriebeanordnung 10₂ sind die Lagerungsscheiben 42 innerhalb des Gehäuses 34 des Elektromotors 14 angeordnet. Hierdurch kann das Planetengetriebe 12 um die Breite der Lagerungsscheibe 42 näher zum Elektromotor 14 angeordnet werden, so dass der axiale Bauraum der Motor-Getriebeanordnung 10₁ entsprechend reduziert werden kann. Der Adapter 48 ist axial entsprechend kürzer ausgeführt.

In der dritten Ausführungsform der Motor-Getriebeanordnung 10₃ sind beide Lagerungsscheiben 42 im zweiten Lagerungsabschnitt 38 angeordnet, wobei eine der Lagerungsscheiben 42 innerhalb und die andere der Lagerungsscheiben 42 außerhalb des Gehäuses 34 angeordnet sind.

In der vierten Ausführungsform der Motor-Getriebeanordnung 10₄ sind beide Lagerungsscheiben 42 im ersten Lagerungsabschnitt 36 angeordnet, wobei eine der Lagerungsscheiben 42 innerhalb und die andere der Lagerungsscheiben 42 außerhalb des Gehäuses 34 angeordnet sind. Wie bei der zweiten Ausführungsform kann das Planetengetriebe 12 um die Breite der Lagerungsscheibe 42 näher zum Elektromotor 14 angeordnet werden.

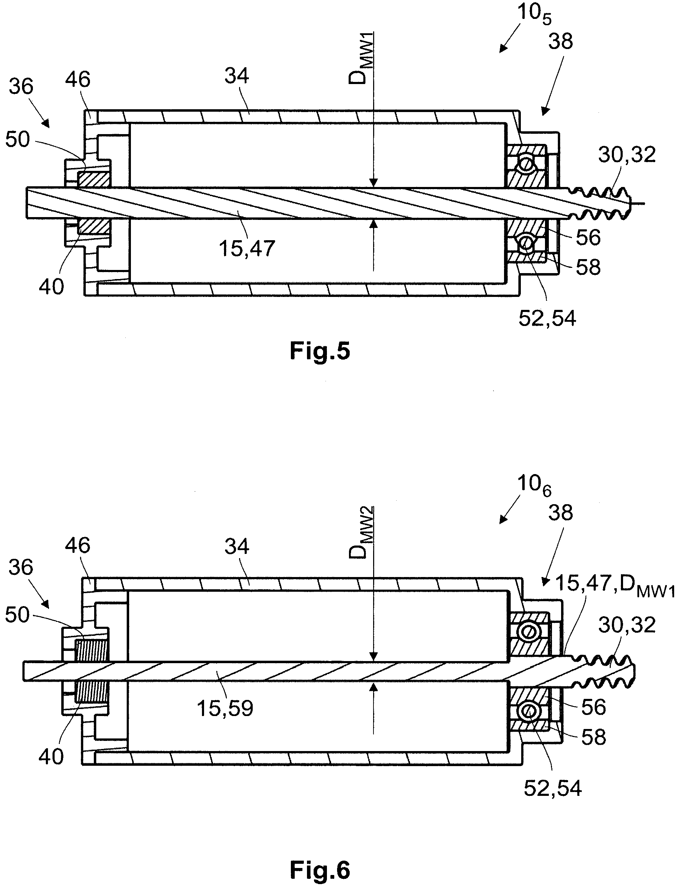

In Figur 5 ist ein fünftes Ausführungsbeispiel der Motor-Getriebeanordnung 10₅ dargestellt, wobei jedoch das Planetengetriebe 12 nicht dargestellt ist. Das Planetengetriebe 12 kann genauso aufgebaut und mit dem Gehäuse 34 des Elektromotors 14 verbunden sein wie in den zuvor beschriebenen Ausführungsbeispielen. In diesem Ausführungsbeispiel ist im ersten Lagerungsabschnitt 36 wie in den zuvor beschriebenen Ausführungsbeispielen auch ein Gleitlager 40 angeordnet, welches an einem Absatz 50 des Gehäuses 34 anliegt und axial gesichert ist. Im zweiten Lagerungsabschnitt 38 ist ein Wälzlager 52, im dargestellten Beispiel ein Kugellager 54, angeordnet, mit welchem die Motorwelle 15 nicht nur radial, sondern auch axial gelagert ist. Ein innerer Ring 56 des Kugellagers 54 ist auf die Motorwelle 15 aufgepresst und ein äußere Ring 58 im Gehäuse 34 des Elektromotors 14 festgelegt. Die Anordnung des Gleitlagers 40 und des Wälzlagers 52 kann auch umgekehrt werden, so dass das Wälzlager 52 im ersten Lagerungsabschnitt 36 und das Gleitlager 40 im zweiten Lagerungsabschnitt 38 angeordnet sind.

In Figur 6 ist ein sechstes Ausführungsbeispiel der Motor-Getriebeanordnung 10₆ dargestellt, bei dem das Planetengetriebe 12 ebenfalls nicht dargestellt ist. Die Motor-Getriebeanordnung 10₆ ist weitgehend identisch aufgebaut wie die Motor-Getriebeanordnung 10₅ nach dem fünften Ausführungsbeispiel. Der erste Wellenabschnitt 47, in welchem die Motorwelle 15 den ersten Motorwellendurchmesser D_{MW1} aufweist, erstreckt sich aber nicht über die gesamte Motorwelle 15, sondern schließt in etwa bündig mit dem zum Inneren des Elektromotors 14 zeigenden Ende des Kugellagers 54 ab. Der erste Wellenabschnitt 47 schließt sich unmittelbar an die Motorwellenverzahnung 30 an und weist den ersten Motorwellendurchmesser D_{MW1} auf, der, wie auch in Figur 1a dargestellt, gleich dem Verzahnungsdurchmesser DV ist. Von der Motorwellenverzahnung 30 aus gesehen hinter dem ersten Wellenabschnitt 47 weist die Motorwelle 15 einen zweiten Wellenabschnitt 59 mit einem zweiten Motorwellendurchmesser D_{MW2} auf, der geringer ist als der erste Motorwellendurchmesser D_{MW1}. Der zweite Wellenabschnitt 59 mit dem zweiten Motorwellendurchmesser D_{MW2} erstreckt sich bis zum der Motorwellenverzahnung 30 gegenüberliegenden Ende der Motorwelle 15, so dass das Gleitlager 40 im Gegensatz zum fünften Ausführungsbeispiel der Motor-Getriebeanordnung 10₅ im zweiten Wellenabschnitt 59 in Kontakt tritt, also dort, wo die Motorwelle 15 den zweiten Motorwellendurchmesser D_{MW2} aufweist. Genauso wie im fünften Ausführungsbeispiel der Motor-Getriebeanordnung 10₅ ist das Kugellager 54 im ersten Wellenabschnitt 47 angeordnet, in welchem die Motorwelle 15 den ersten Motorwellendurchmesser D_{MW1} aufweist.

Bei sämtlichen Ausführungsformen der Motor-Getriebeanordnung 10 sind die beiden Lagerungsabschnitte 36, 38 im Gehäuse 34 des Elektromotors angeordnet, so dass kein Lager im Planetenträger 16 angeordnet werden muss, was die Montage vereinfacht.

Aus Darstellungsgründen ist der Verzahnungsdurchmesser DV nur in der Figur 1a wiedergebeben. Die Ausführungen zum Verzahnungsdurchmesser D_{V} gelten aber auch für das zweite bis sechste Ausführungsbeispiel der Motor-Getriebeanordnung 10₂ - 10₅.

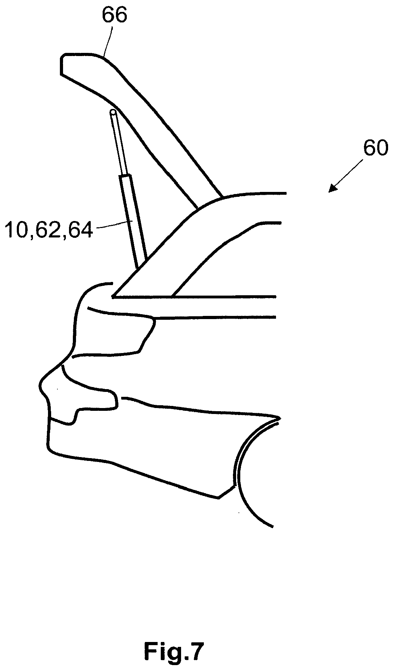

In Figur 7 ist ein Fahrzeug 60 anhand einer prinzipiellen Seitenansicht teilweise gezeigt, welches eine Verstelleinrichtung 62 zum Verstellen zweier zueinander verstellbarer Fahrzeugteile aufweist. In diesem Fall ist die Verstelleinrichtung 62 als eine Heckklappenverstellung 64 ausgeführt, mit welcher eine Heckklappe 66 des Fahrzeugs 60 gegenüber dem übrigen Fahrzeug 60 verstellt und somit geöffnet und geschlossen werden kann. Die Heckklappenverstellung 64 weist eine Motor-Getriebeanordnung 10 nach einer der zuvor beschriebenen Ausführungsformen auf, die in Figur 5 nicht explizit dargestellt ist.

### Bezugszeichenliste

- 10, 10₁ - 10₆: Motor-Getriebeanordnung
- 12: Planetengetriebe
- 14: Elektromotor
- 15: Motorwelle
- 16: Planetenträger
- 18: Planetenrad
- 20: Planetenradverzahnung
- 22: Hohlrad
- 24: Innenradverzahnung
- 26: Schraubrad-Planetengetriebe
- 28: Innenschraubrad
- 30: Motorwellenverzahnung
- 32: Schraubrad-Sonne
- 34: Gehäuse
- 36: erster Lagerungsabschnitt
- 38: zweiter Lagerungsabschnitt
- 40: Gleitlager
- 42: Lagerungsscheibe
- 44: zylindrische Aufnahme
- 46: Deckel
- 47: erster Wellenabschnitt
- 48: Adapter
- 50: Absatz
- 52: Wälzlager
- 54: Kugellager
- 56: innerer Ring
- 58: äußerer Ring
- 59: zweiter Wellenabschnitt
- 60: Fahrzeug
- 62: Verstelleinrichtung
- 64: Heckklappenverstellung
- 66: Heckklappe
- A_{MW}: Motorwellenachse
- A_{P}: Planetenradachse
- A_{PT}: Planetenträgerachse
- D_{MW1}: erster Motorwellendurchmesser
- D_{MW2}: zweiter Motorwellendurchmesser.
- D_{V}: Verzahnungsdurchmesser

## Patentansprüche

1. Motor-Getriebeanordnung insbesondere für eine Verstelleinrichtung (62) in Fahrzeugen (60) zum Verstellen zweier zueinander verstellbarer Fahrzeugteile, umfassend
- ein Planetengetriebe (12) mit
zumindest einem Planetenträger (16),
zumindest einem Planetenrad (18), das drehbar im Planetenträger (16) gelagert ist und eine Planetenradverzahnung (20) aufweist, und
einem Hohlrad (22) mit einer Innenverzahnung (24), welche mit der Planetenradverzahnung (20) in Eingriff steht, und
- einen Elektromotor (14) mit einer um eine Motorwellenachse (A_{MW}) drehbaren Motorwelle (15), welche eine direkt auf der Motorwelle (15) angeordnete Motorwellenverzahnung (30) aufweist, die mit der Planetenradverzahnung (20) in Eingriff steht.

2. Motor-Getriebeanordnung nach Anspruch 1,
**dadurch gekennzeichnet, dass** das Planetengetriebe (12) als ein Schraubrad-Planetengetriebe (26) ausgebildet ist, wobei das zumindest eine Planetenrad (18) um eine Planetenradachse (A_{P}) drehbar im Planetenträger (16) gelagert ist und die Planetenradachse (A_{P}) windschief zu einer Planetenträgerachse (A_{PT}) verläuft.

3. Motor-Getriebeanordnung nach einem der Ansprüche 1 oder 2,
**dadurch gekennzeichnet, dass** das Planetengetriebe (12) und insbesondere das Schraubrad-Planetengetriebe (26) einstufig ausgebildet sind.

4. Motor-Getriebeanordnung nach einem der vorherigen Ansprüche,
**dadurch gekennzeichnet, dass** der Elektromotor (14) ein Gehäuse (34) aufweist und die Motorwelle (15) mittels eines ersten Lagerungsabschnitts (36) und eines zweiten Lagerungsabschnitts (38) axial und radial im Gehäuse (34) gelagert ist.

5. Motor-Getriebeanordnung nach Anspruch 4,
**dadurch gekennzeichnet, dass** der erste Lagerungsabschnitt (36) und/oder der zweite Lagerungsabschnitt (38) jeweils ein Gleitlager (40) zum radialen Lagern der Motorwelle (15) umfassen.

6. Motor-Getriebeanordnung nach einem der Ansprüche 4 oder 5,
**dadurch gekennzeichnet, dass** zumindest eine Lagerungsscheibe (42) mit der Motorwelle (15) verbunden ist, mit welcher die Motorwelle (15) in zumindest einem der Lagerungsabschnitte (36, 38) axial gelagert ist.

7. Motor-Getriebeanordnung nach den Ansprüchen 5 und 6,
**dadurch gekennzeichnet, dass** die zumindest eine Lagerungsscheibe (42) am Gleitlager (40) anliegt.

8. Motor-Getriebeanordnung nach einem der Ansprüche 1 bis 4 und 7,
**dadurch gekennzeichnet, dass** der erste Lagerungsabschnitt (36) oder der zweite Lagerungsabschnitt (38) ein Wälzlager (40) zum radialen und axialen Lagern der Motorwelle (15) umfasst.

9. Motor-Getriebeanordnung nach Anspruch 8,
**dadurch gekennzeichnet, dass** das Wälzlager (40) im ersten Wellenabschnitt (47) angeordnet ist und die Motorwelle (15) einen zweiten Wellenabschnitt (59) mit einem zweiten Wellendurchmesser (D_{MW2}) aufweist, der kleiner ist als der erste Wellendurchmesser (D_{MW1}).

10. Motor-Getriebeanordnung nach einem der vorherigen Ansprüche,
**dadurch gekennzeichnet, dass** das Hohlrad (22) drehfest mit dem Elektromotor (14) verbunden ist.

11. Motor-Getriebeanordnung nach Anspruch 10,
**dadurch gekennzeichnet, dass** zwischen dem Hohlrad (22) und dem Elektromotor (14) ein Adapter (48) angeordnet ist, der drehfest mit dem Elektromotor (14) und dem Hohlrad (22) verbunden ist.

12. Verwendung einer Motor-Getriebeanordnung (10) nach einem der vorherigen Ansprüche für eine Verstelleinrichtung (62) in Fahrzeugen (60) zum Verstellen zweier zueinander verstellbarer Fahrzeugteile.

13. Verwendung nach Anspruch 12,
**dadurch gekennzeichnet, dass** die Verstelleinrichtung (62) als eine Heckklappenverstellung (64) ausgebildet ist.

14. Verwendung nach Anspruch 13,
**dadurch gekennzeichnet, dass** das Planetengetriebe (12) als ein Schraubrad-Planetengetriebe (26) ausgebildet ist.

15. Elektromotor insbesondere zur Verwendung in einer Motor-Getriebeanordnung (10) nach einem der Ansprüche 1 bis 11, wobei der Elektromotor eine um eine Motorwellenachse (A_{MW}) drehbare Motorwelle (15) umfasst, welche eine direkt auf der Motorwelle (15) angeordnete Motorwellenverzahnung (30) aufweist.

16. Elektromotor nach Anspruch 15,
**dadurch gekennzeichnet, dass** der Elektromotor (14) ein Gehäuse (34) aufweist und die Motorwelle (15) mittels eines ersten Lagerungsabschnitts (36) und eines zweiten Lagerungsabschnitts (38) axial und radial im Gehäuse (34) gelagert ist.

17. Verstelleinrichtung in Fahrzeugen (60) zum Verstellen zweier zueinander verstellbarer Fahrzeugteile, umfassend zumindest eine Motor-Getriebeanordnung (10) nach einem der Ansprüche 1 bis 11.
